# EUROPÄISCHE PATENTSCHRIFT

(11) **EP 1 926 384 B1**
(45) Veröffentlichungstag und Bekanntmachung des Hinweises auf die Patenterteilung: **02.06.2010**
(21) Anmeldenummer: 06805655.5
(22) Anmeldetag: 06.09.2006
(51) Int. Cl.: A22C 13/00

(54) **VERPACKUNGSFOLIE MIT MIKROFASERN UND SCHADSTOFFARMES HERSTELLUNGSVERFAHREN**
PACKAGING FILM WITH MICROFIBRES AND CLEAN PRODUCTION METHOD
FILM D'EMBALLAGE COMPRENANT DES MICROFIBRES ET PROCEDE DE PRODUCTION PEU POLLUANT DE CE FILM

(30) Priorität: 10.09.2005 DE 102005043149
(43) Veröffentlichungstag der Anmeldung: 04.06.2008
(73) Patentinhaber: Kalle GmbH, 65203 Wiesbaden (DE)
(72) Erfinder: NEEFF, Rainer, 65203 Wiesbaden (DE); GORD, Herbert, 55218 Ingelheim (DE); FÖGLER, Jens, 65232 Taunusstein (DE); SEELGEN, Michael, 65510 Idstein (DE)
(74) Vertreter: Plate, Jürgen
(86) Internationale Anmeldenummer: PCT/EP2006/008665
(87) Internationale Veröffentlichungsnummer: WO 2007/028581

(56) Entgegenhaltungen:
- EP-A- 1 413 203
- EP-A1- 0 006 551
- WO-A-00/40092
- FR-A- 2 798 399
- US-A- 4 399 839

## Beschreibung

Die Erfindung betrifft eine Verpackungsfolie auf Basis von regenerierter Cellulose, ein Verfahren zu ihrer Herstellung und deren Verwendung.

Verpackungsfolien, insbesondere schlauchförmige Verpackungsfolien, auf Basis von regenerierter Cellulose mit und ohne Innenverstärkung durch eine Faservlieseinlage werden seit langem zur Verpackung von Nahrungsmitteln und als künstliche Wursthüllen eingesetzt. Die entsprechenden Flachfolien können nach Formung zu einem Schlauch mit geklebter, genähter oder gesiegelter Naht versehen und als künstliche Wursthüllen eingesetzt werden. Solche Wursthüllen werden jedoch in der Regel bereits schlauchförmig extrudiert und kommen dann als nahtlose Schläuche in den Handel.

Wursthüllen aus regenerierter Cellulose werden auch als Kunstdärme bezeichnet und in der fleischverarbeitenden Industrie oder beim Metzger in großen Mengen eingesetzt. Sie werden in zahlreichen Variationen bezüglich Kaliber, Farbe und Imprägnierung hergestellt und lassen sich somit für fast jede Wurstsorte verwenden. Aufgrund des Herstellungsverfahrens haben sie den Vorteil einer hohen Kaliberkonstanz, was beim Verarbeiten auf automatischen Füllmaschinen besonders zur Geltung kommt.

Verfahren zur Herstellung von Kunstdärmen auf Basis von regenerierter Cellulose sind beispielsweise in den deutschen Patenten 11 07 928, 19 65 129, 28 29 102 und im US-Patent 4 195 054 beschrieben. Sie beruhen allgemein auf dem Viskose-Verfahren, das sowohl bei der Wursthüllenherstellung als auch bei der Herstellung von Cellulose-Fasern (Rayon) oder Cellulose-Film (Cellophan) angewendet wird. Dabei wird Zellstoff, beispielsweise Holz-Zellstoff oder Baumwoll-Linters, mit Natronlauge umgesetzt (Alkalisierung), wobei durch geeignete Reaktionsführung ein gezielter Abbau der Cellulose-Molekülketten erfolgt. Nach mehreren Behandlungsschritten wird die so gebildete Alkali-Cellulose durch Reaktion mit Schwefelkohlenstoff (Sulfidierung) in Cellulose-Xanthogenat überführt. Die Xanthogenate sind die Ester der unbeständigen Xanthogensäure. Das Cellulose-xanthogenat ist im Gegensatz zur ursprünglichen Cellulose in Natronlauge löslich. Nach Entgasung und Lagerung unter definierten Bedingungen (Reife) ist die braune zähflüssige Masse (allgemein als Viskose bezeichnet) spinnfähig. Daher kann sie durch Extrusion über entsprechende Düsen und anschließende Behandlung mit Schwefelsäure in beliebige Formen wie Fasern, Flachfolien, Schläuche oder sonstige Formkörper gebracht werden. Nach umfangreichen Reinigungsprozessen, Plastifizierung und Wasserentzug ist das Cellulosegebilde dann fertig zum weiteren Einsatz.

Die Reaktion des Cellulose-xanthogenats mit Säure liefert jedoch außer der erwünschten regenerierten Cellulose (Regenerat-Cellulose) auch noch die unbeständige Xanthogensäure, die sofort in Wasser, Schwefelkohlenstoff und über weitere Nebenreaktionen auch in Schwefelwasserstoff zerfällt. Durch die Neutralisationsreaktion fällt ferner Natriumsulfat (Glaubersalz) an.

Die Entsorgung dieser Nebenprodukte ist problematisch. Schwefelwasserstoff und Schwefelkohlenstoff sind bekanntermaßen außerordentlich giftig, leicht flüchtig und brennbar, unter entsprechenden Bedingungen auch explosiv. Die Entsorgung oder weitere Verwertung von Schwefelwasserstoff und Schwefelkohlenstoff, die gasförmig anfallen, erfolgt heute beispielsweise aus den luftdicht gekapselten Produktionsanlagen durch Absaugen. Der Schwefelkohlenstoff wird beispielsweise an Aktivkohle adsorbiert, nach Desorption destilliert und wieder eingesetzt, der Schwefelwasserstoff mit alkalischer Lösung gebunden und als Sulfidlauge in anderen chemischen Verfahren verwendet. Das Glaubersalz wird auskristallisiert und kann ebenfalls anderweitig benutzt werden. Das entstandene Neutralisationswasser wird dem System durch Eindampfen entzogen.

In der EP-A 1 413 203 ist eine eßbare, d.h. für den Mitverzehr geeignete schlauchförmige Hülle auf Basis von Cellulose offenbart. Diese wird unter Verwendung einer Lösung von Cellulose in wäßrigem N-Methyl-morpholin-N-oxid (NMMO), d.h, in einem wäßrigen Aminoxid hergestellt. Die genannte Lösung von Cellulose in wäßrigem NMMO wird mit Proteinen und Füllstoffen vermischt. Unter den Füllstoffen ist auch mikrokristalline Cellulose genannt. Die Mischung wird zu einem Schlauch geformt, anschließend wird die Cellulose ausgefällt. Bei der Herstellung der Hülle gemäß der EP-A 1 413 203 wird die Cellulose in keiner Weise chemisch verändert, anders als im Viskoseverfahren. Sie wird rein physikalisch gelöst in dem wäßrigen NMMO.

Gegenstand der EP 0 006 551 ist eine schlauchförmige Nahrungsmittelhalle auf Basis von Cellulosehydrat mit einem Überzug auf der Innenseite, durch den sich die Hülle leicht von dem Nahrungsmittel abschälen läßt. Die Hülle wird nach dem Viskoseverfahren hergestellt. Auf die Innenseite der Hülle auf Basis wird eine Mischung aufgetragen, die a) natürliche Öle und/oder Triglyceride von natürlichen Pflanzenfettsäuren und b) nicht-reaktive hydrophilie wasserlösliche oder wasserquellbare Stärkederivate und/oder mikrokristalline Cellulose und/oder teilverseiften Polyvinylalkohol umfaßt. Die Mischung wird in Form einer Öl-in-Wasser-Emulsion aufgetragen und dabei gebildete Schicht getrocknet.

In der WO 00/40092 ist ein naßgelegtes Faserpapier offenbart, das mit Viskose, einem Harz oder einer Harzmischung gebunden wurde. Das Faserpapier umfaßt Cellulosefasern, insbesondere Abaca-Fasern, sowie synthetische Fasern. Zum Binden wird speziell eine verdünnte Viskose eingesetzt, die rechnerisch etwa 1 Ges.-% an Cellulose enthält. Das in der Viskose enthaltene Cellulose-Xanthogenat wird dann in einem wäßrigen Säurebad zu Cellulose regeneriert. Der Anteil regenerierter Cellulose ist dabei relativ gering. Er beträgt etwa 5 Gew.-%, bezogen auf das Ausgangsgewicht des Faserpapiers. Es wird dementsprechend keine durchgehende Schicht aus regenerierter Cellulose auf dem Faserpapier erzeugt, sondern nur die zum Binden der Fasern notwendige Menge. Das auf diese Weise naßfest ausgerüstete Faserpapier wird in Streifen passender Breite geschnitten, die zu Schläuchen mit überlappender Längsnaht geformt und dann mit Viskose (etwa 7 Gew.-% rechnerischer Celluloseanteil) beschichtet werden. Aus der Viskose wird dann mit Hilfe von Säure die Cellulose regeneriert.

Trotz des scheinbar geschlossenen Kreislaufs hat das Verfahren wesentliche Nachteile:
- Die Einsatzmöglichkeiten für Glaubersalz und Sulfidlauge sind begrenzt. Es wird immer schwieriger, die anfallenden Mengen am Markt unterzubringen.
- Die Anlagen zur Reinigung der Abluft sind umfangreich, kompliziert und teuer.
- Durch die Volumina der Kessel-Anlagen, speziell die zur CS₂-Adsorption und zur Laugewäsche, ist eine Produktionserweiterung mit hohen Kosten verbunden. Da beim traditionellen Viskoseverfahren der Anfall der genannten Nebenprodukte zu der eingesetzten Cellulosemenge direkt proportional ist, kann hier nicht immer schnell genug reagiert werden.
- Installation und Betrieb der Anlagen sowie die Produktionserweiterung sind mit hohen Kosten verbunden und von meist langwierigen behördlichen Genehmigungsverfahren abhängig.

Bei der Herstellung schlauchförmiger Produkte aus regenerierter Cellulose ist das Entstehen von gasförmigen und flüssigen Nebenprodukten besonders nachteilig:

Nach Extrusion der regenerierten Cellulose aus den üblichen Rundschlitzdüsen ist der Schlauch in sich geschlossen. Die Regeneration umfaßt jedoch mehrere Stufen auf der Produktionsanlage, da aus Gründen der gleichmäßigen Beschaffenheit des Schlauches die Säurebehandlung in Einzelschritten erfolgen muß. Die dabei im Inneren des Schlauches gebildeten Gas- und Wasseranteile führen dazu, daß dieser nicht mehr flach liegt, was den Transport über die Anlage erschwert. Daher wird die kontinuierliche Fahrweise periodisch unterbrochen und durch Einschneiden von Öffnungen für ein Entweichen der Gase und des Wassers aus dem Schlauchinneren gesorgt. Diese Schnittstellen führen zu Störungen im Ablauf und zu einem erhöhtem Anteil an Abfall.

Aufgabe der Erfindung war es deshalb, ein Verfahren zur Herstellung von Folien oder Nahrungsmittelhüllen aus regenerierter Cellulose zur Verfügung zu stellen, bei dem während der Herstellung der gleichen Produktmenge
- weniger Reaktionsgase und damit weniger Schadstoffe entstehen,
- weniger Neutralisationswasser entsteht,
- auf den Produktionsanlagen bei höherer Produktionsgeschwindigkeit längere, unterbrechungsfreie Schlauchstücke erzeugt werden können und damit der Abfallanteil vermindert wird.

Gelöst wird die Aufgabe durch eine Folie oder Nahrungsmittelhülle auf Basis von aus Viskose regenerierter Cellulose, die dadurch gekennzeichnet ist, daß die regenerierte Cellulose mit Mikrofasern und/oder mikrokristalliner Cellulose vermischt ist.

Bei optimaler Durchmischung mit der Viskose entsteht beim Ausfällen der Viskose eine Matrix, in der Mikrofasern und/oder mikrokristalline Cellulose gleichmäßig verteilt und fest eingebaut sind.

Um das gleiche Flächengewicht wie bei den bisher üblichen Hüllen zu erhalten, wird der Anteil an Viskose und damit an regenerierter Cellulose vermindert und die fehlende Menge durch Mikrofasern und/oder mikrokristalline Cellulose ersetzt. Dafür wird allgemein eine wäßrige Suspension, die die Mikrofasern und/oder die mikrokristalline Cellulose enthält, der Viskose zugemischt, zweckmäßig unmittelbar bevor diese extrudiert und regeneriert wird.

Mikrofasern sind extrem feine Fasern aus Cellulose, Polyester, Polyethylen, Polyamid, Polysacchariden oder Acryl. Die Faserfeinheit liegt bei weniger als 2 dtex, insbesondere im Bereich von 1,7 dtex bis 0,001 dtex. Die Feinheit der Faser wird deutlich, wenn man berücksichtigt, daß 1 g der Faser eine Lauflänge bis zu 1 000 km besitzt. Geeignete Faserlängen der Mikrofasern betragen von 0,01 bis 20 mm, bevorzugt 0,1 bis 4 mm, insbesondere 0,2 bis 2 mm.

Insbesondere fürVerpackungsfolien auf dem "non-food"-Gebiet lassen sich Mikrofasern auf Basis von Polyester, Polyamid oder Polyethylen einsetzen.

Bevorzugt bestehen die Mikrofasern jedoch aus Cellulose und weisen damit eine besondere chemische Affinität zur regenerierten Cellulose auf. Das Fasergewicht der Mikrofaser aus Cellulose beträgt beispielsweise 1,7 dtex, die mittlere Faserlänge etwa 3 bis 4 mm. Besonders geeignet sind Cellulose-Mikrofasern mit einem Celluloseanteil von 99,5 Gew.-% und maximal 0,3 Gew.-% Sulfatascheanteil, die in einer 10 gew.-%igen wäßrigen Suspension einen pH-Wert von 5,0 bis 7,5 aufweisen, ein Schüttgewicht von etwa 75 g/l und eine durchschnittliche Faserlänge von 300 µm haben. Ein solcher Mikrofasern-Typ ist beispielsweise unter der Bezeichnung VIVACEL^{®} (JRS Pharma, Rosenberg) oder JELUCEL^{®} (Jelu-Werk, Rosenberg) im Handel.

Mikrokristalline Cellulose ist ein technologischer Hilfsstoff für die gesamte Lebensmittelindustrie. Sie dient beispielsweise als unverdaulicher Ballaststoff, Trennmittel oder Trägerstoff von hoher chemischer und mikrobieller Reinheit. Nach der Lebensmittelkennzeichnungsverordnung in der Europäischen Gemeinschaft wird mikrokristalline Cellulose mit der E-Nummer 460 deklariert. Je nach Typ hat die mikrokristalline Cellulose eine rohweiße bis weiße Farbe, einen Celluloseanteil von 99,5 Gew.-%, einen Sulfatasche-Anteil von maximal 0,05 Gew.-%, in einer 10%igen wäßrigen Suspension einen pH-Wert von 5,5 bis 7,0, ein Schüttgewicht von etwa 230 g/l bis 390 g/l und eine Partikelgröße von 20 µm bis 190 µm. Mikrokristalline Cellulose ist beispielsweise unter der Bezeichnung VIVAPUR^{®} (JRS Pharma, Rosenberg) erhältlich.

Zur Herstellung von mikrokristalliner Cellulose wird zerkleinertes Holz nach einem sauren Sulfit- oder einem alkalischen Sulfidaufschluss vom Lignin und Hemicellulosen befreit. Danach werden mit Chlor, Chlordioxid oder Hypochloritlösung Ligninreste entfernt. Nach dem Behandeln.mit Natriumhydroxid und partieller Hydrolyse mit Salzsäure und anschließender Sprühtrocknung entsteht die mikrokristalline Cellulose.

Der Anteil an Mikrofasern und/oder mikrokristalliner Cellulose beträgt allgemein bis zu etwa 50 Gew.-%, bevorzugt etwa 10 bis 30 Gew.-%, besonders bevorzugt etwa 15 bis 25 Gew.-%, jeweils bezogen auf das Gewicht der regenerierten Cellulose. Besonders bevorzugt sind Folien, die sowohl Cellulose-Mikrofasern als auch mikrokristalline Cellulose enthalten. Das Gewichtsverhältnis zwischen beiden beträgt dabei bevorzugt 100 : 0 bis 5 : 95, besonders bevorzugt 80 : 20 bis 40 : 60.

Für die Herstellung von Verpackungsfolien, die als Nahrungsmittelhüllen dienen sollen, ist es erforderlich, mikrokristalline Cellulose-Typen oder Mikrofasern zu verwenden, die folgende Bedingungen erfüllen:
- sie müssen sich problemlos in die Viskose einmischen lassen,
- sie dürfen sich in alkalischem Medium nicht lösen,
- sie dürfen die mechanischen und optischen Eigenschaften der entstehenden Produkte nicht negativ beeinflussen und
- sie müssen - beispielsweise bei Nahrungsmittelhüllen - lebensmittelrechtlich unbedenklich und zugelassen sein.

Für den Einsatz in Nahrungsmittelhüllen werden die geforderten Eigenschaften in besonderem Maße von Mikrofasern aus Cellulose, gegebenenfalls im Gemisch mit mikrokristalliner Cellulose, erfüllt. Hier sind durch die chemische Affinität zur Cellulose gute Voraussetzungen für eine gleichmäßige Einarbeitung und eine homogene Verteilung gegeben. Durch Ausbildung von Wasserstoffbrückenbindungen gewinnt die schlauchförmige Hülle an Festigkeit, was ihre durch die verminderte Menge an regenerierter Cellulose verursachte Schwächung kompensiert.

In einer bevorzugten Ausführungsform sind die Verpackungsfolien mit einem Faservlies verstärkt. Das Faservlies ist allgemein ein naßfest ausgerüstetes Faserpapier mit einem Trockengewicht von etwa 15 bis 29 g/m². Besonders bevorzugt sind Hanffaserpapiere, die durch Behandeln mit verdünnter Viskose und anschließendem Regenerieren der Viskose zu Cellulosehydrat und/oder durch Behandeln mit einem synthetischen Harz naßfest gefacht wurden. Das Faserpapier wird in Bahnen passender Breite geschnitten, die dann zu Schläuchen mit überlappenden Längskanten geformt werden. Die Faserpapierschläuche werden mit Hilfe von Beschichtungs-Ringdüsen von innen, von allen oder von beiden Seiten mit Viskose beaufschlagt. Auf diese Weise werden innen-, außen- oder doppelviskosierte Faserdärme erhalten. Sie haben allgemein ein Gewicht von 60 bis 130 g/m² bei einem Glycerinanteil von 20 Gew.-% und einem Wasseranteil von 10 Gew.-%, jeweils bezogen auf das Gesamtgewicht. Die nicht faserverstärkten Verpackungsfolien haben dagegen ein Gewicht von 30 bis 180 g/m², bevorzugt von 50 bis 120 g/m², wiederum bei 20 Gew.-% Glycerinanteil und 10 Gew.-% Wasseranteil, bezogen auf das Gesamtgewicht.

Die erfindungsgemäße Verpackungsfolie auf Basis von aus Viskose regenerierter Cellulose mit einem verminderten Anteil an regenerierter Cellulose und einem Gehalt an Mikrofasern und/oder mikrokristalliner Cellulose stellt einen neuen Folientyp dar, der durch eine aufgelockerte Struktur und höhere Durchlässigkeit gekennzeichnet ist. Die Folie oder die Nahrungsmittelhülle zeigt beispielsweise eine Permeation, die bei etwa 120 bis 250 l/m²d bei 40 bar liegt, vorzugsweise bei 150 bis 200 l/m²d. Die Durchlässigkeit für Wasserdampf liegt oberhalb derer von bisher bekannten Nahrungsmittelhüllen; sie beträgt etwa 1500 bis 2000 g/m²d (DIN 53 122).

Bei speziellen Imprägnierungen kann eine hohe Permeation unerwünscht sein. In einem solchen Fall ist eine doppelviskosierte Hülle verwendbar, bei der Mikrofasern und/oder mikrokristalline cellulose ausschließlich jener Cellulosehydrat-Schicht zugemischt sind, die sich auf der Außenseite befindet. Die auf der Innenseite, d.h. der dem Nahrungsmittel zugewandten Seite, befindliche Cellulosehydratschicht ist dann frei von Mikrofasern oder mikrokristalliner Cellulose. Alternativ dazu können sich die Mikrofasern und/oder die mikrokristalline Cellulose ausschließlich in der Cellulosehydratschicht auf der Innenseite befinden.

Herstellen läßt sich die erfindungsgemäße Verpackungsfolie oder Nahrungsmittelhülle nach einem Verfahren, das die folgenden Schritte umfaßt:
a) Bereitstellen von Mikrofasern und/oder mikrokristalline Cellulose in Form einer wäßrigen oder wäßrig-alkalischen Suspension,
b) Bereitstellen von Viskose,
c) Vermischen der wäßrigen oder wäßrig-alkalischen Suspension mit der Viskose,
d) Extrudieren der Mischung oder Beschichten eines Faservlieses mit der Mischung auf einer oder beiden Seiten,
e) Regenerieren der Viskose zu Cellulose durch Behandeln mit Säure und
f) Waschen, gegebenenfalls Plastifizieren, gegebenenfalls Imprägnieren, und Trocknen.

Die wäßrige Suspension mit den Mikrofasern aus Cellulose und/oder mikrokristalliner Cellulose enthält zweckmäßig etwa 2 bis 25 Gew.-%, bevorzugt etwa 5 bis 10 Gew.-%, an Mikrofasern aus Cellulose und/oder an mikrokristalliner Cellulose, bezogen auf das Gesamtgewicht der Suspension.

Die Suspension von Mikrofasern aus Cellulose und/oder mikrokristalliner Cellulose wird unter guter Durchmischung über einen dynamischen oder statischen Mischer der Viskose zugesetzt, allgemein kurz bevor diese in die Spinndüse eintritt. Dazu wird die Menge an Viskose gedrosselt und gleichzeitig die Zugabe der Suspension, die Mikrofasern und/oder mikrokristalline Cellulose enthält, entsprechend erhöht. Bei der unmittelbar nach dem Austritt aus der Düse einsetzenden Säurebehandlung wird die Mischung zunächst verfestigt ("gefällt"), so daß die erreichte Verteilung der Fasern aufrecht erhalten bleibt. Im weiteren Verlauf wird die aus der Spinndüse austretende Viskose durch die Einwirkung der schwefelsauren Bäder in homogenes Cellulosehydrat umgewandelt.

Die Verpackungsfolie ist bevorzugt schlauchförmig, wobei der Schlauch eine zylindrisch gerade, eine zylindrisch gebogene oder eine spiralförmige Form aufweisen kann. Der Durchmesser kann regelmäßig oder unregelmäßig variieren. Dabei wird die Schlauchfolie ohne Vliesverstärkung zweckmäßig erst beim Trocknen in eine spiralförmige Form oder in eine Form mit regelmäßig oder unregelmäßig variierendem Durchmesser gebracht.

Da Mikrofasern aus Cellulose beim Einbringen in Wasser zum Klumpen neigen und die Suspension schnell hochviskos wird, ist es vorteilhaft, Mischungen aus mikrokristalliner Cellulose und Mikrofasern aus Cellulose in Form einer wäßrig-alkalischen Suspension einzubringen, da diese leichter zu handhaben ist. Das Mischungsverhältnis kann dabei in relativ weiten Grenzen schwanken. Gegebenenfalls können auch oberflächenaktive Mittel zugesetzt werden.

Im Falle der mit einem Faservlies verstärkten Nahrungsmittelhülle wird das Gemisch aus Viskose und Mikrofasern und/oder mikrokristalliner Cellulose ein- oder beidseitig auf das zum Schlauch geformte Faservlies extrudiert. Das Vlies wird dabei von der Spinnmasse durchdrungen, so daß sich nach der völligen Regeneration der Cellulose ein praktisch unlösbarer Verbund ergibt.

Der Vorteil des erfindungsgemäßen Verfahrens ist, daß sich durch die Reduktion der regenerierten Cellulosemenge pro Zeiteinheit die entstehende Menge an Schwefelkohlenstoff und Schwefelwasserstoff bei der Säurebehandlung vermindert. Das Verfahren ist damit besonders schadstoffarm. Ferner vermindert sich auch die Menge an Neutralisationswasser, das sich während der Herstellung im Inneren des Schlauches ansammelt, da die zu neutralisierende Laugenmenge pro gesponnener Einheit Nahrungsmittelhülle geringer ist. Da andererseits die Regeneration wegen des gleichgebliebenen Säureangebots bereits in der Spinnkufe rascher fortschreitet, entsteht an der Spinnkufe auch ein entsprechend größerer Anteil an Gas, das aus dem Inneren des Schlauches abgesaugt werden kann. Als Konsequenz läßt sich feststellen, daß die Ansammlung von Gas und Wasser im Schlauchinneren im Verlauf über die Produktionsanlage geringer ist, so daß die Intervalle, in denen ein Schnitt erfolgen muß, größer werden. Bei entsprechender Maschinenauslegung ist es auch möglich, dies dadurch zu nutzen, daß bei gleichem Zeitintervall des Schneidens schneller gefahren wird.

In beiden Fällen erhöht sich die unterbrechungsfreie Lauflänge der Schläuche erheblich. Dadurch ergibt sich eine beträchtliche Verminderung von Abfall, der beim Trocknen im Bereich der Schnittstellen anfällt.

Die Folien und Schläuche aus regenerierter Cellulose (ohne Faserverstärkung) erhalten durch den Gehalt an Mikrofasern und/oder mikrokristalliner Cellulose ein leicht getrübtes Aussehen, was bei vliesverstärkten Folien wegen des ohnehin opaken Trägers nicht ins Gewicht fällt. Nach dem Füllen mit fetthaltigem Wurstbrät wird dieser Effekt jedoch in den meisten Fällen soweit reduziert, daß man auch hier von einer transparenten Hülle sprechen kann. Transparenz bedeutet in diesem Fall, daß die Struktur des Wurstbräts durch die Hülle hindurch erkennbar ist.

Die mechanischen Eigenschaften der Schläuche wie Dehnung, Platzdruck, Abbinde- und Klippfestigkeit, werden bei den vliesverstärkten Hüllen nicht merklich beeinflußt, da deren Eigenschaften im wesentlichen von der Vlies-Einlage abhängen.

Nachfolgend ist die Erfindung an Hand von Beispielen näher erläutert. Prozente sind Gewichtsprozente, soweit nicht anders angegeben oder aus dem Zusammenhang unmittelbar ersichtlich. Weitere Abkürzungen sind entweder erläutert oder entsprechen den üblichen Konventionen.

### Beispiel 1

Es wurde eine Folie auf Basis von regenerierter Cellulose hergestellt, wobei der Viskosestrom um 20% reduziert und gleichzeitig über ein Injektionsventil eine entsprechende Menge an Mikrofasern aus Cellulose mit einer durchschnittlichen Faserlänge von 300 µm und einem durchschnittlichen Faserdurchmesser von 20 µm in Form einer wäßrig-alkalischen Suspension in die Viskoseleitung eindosiert und mittels eines dynamischen Mischers homogen verteilt wurde. Der entstandene Film wurde in ein Spinnbad extrudiert, regeneriert, gewaschen, plastifiziert und getrocknet. Er hatte danach ein Flächengewicht von 69 g/m² bei einem Glyceringehalt von 20 % und einem Wassergehalt von 10 %, bezogen auf das Gesamtgewicht. Beim Lauf über die Spinnmaschine war ein über die Zeit gesehen wesentlich geringerer Anfall an Gas und Reaktionswasser festzustellen. Dies ist auf den teilweisen Ersatz der regenerierten Cellulose (Viskose) durch die Suspension aus Mikrofasern zurückzuführen.

Das getrocknete Material war erwartungsgemäß leicht trüb.

Die Folienbahn wurde in Streifen geschnitten und zu einem Schlauch vom Kaliber 60 geformt. Die überlappenden Längskanten wurden miteinander verklebt. Die so entstandene Schlauchfolie wurde aufgespult und zu sogenannten Raupen mit 50 m Materiallänge konfektioniert. Der Schlauch wurde mit Wurstbrät gefüllt, gebrüht, geräuchert und abgekühlt. Unterschiede zum herkömmlichen Produkt machten sich durch kürzere Räucher- und Reifezeiten bemerkbar.

### Beispiel 2

Es wurde eine schlauchförmige Hülle auf Basis von regenerierter Cellulose vom Kaliber 65 hergestellt, wobei der Viskosestrom um 20% reduziert war. Gleichzeitig wurde über ein Injektionsventil eine entsprechende Cellulosemenge in Form eines Gemisches aus Cellulose-Mikrofasern und mikrokristalliner Cellulose (das Gewichtsverhältnis von Mikrofasern zu mikrokristalliner Cellulose betrug 90:10) in wäßriger Suspension in die Viskoseleitung eindosiert und mittels eines statischen Mischrohres homogen verteilt. Der entstandene Schlauch wurde in ein Spinnbad extrudiert, wobei er über einen Ausbreiter in seiner runden Form gehalten wurde, regeneriert, gewaschen, plastifiziert und getrocknet. Die so hergestellte Hülle hatte ein Flächengewicht von 78 g/m² bei einem Glyceringehalt von 20 % und einem Wassergehalt von 10 %, bezogen auf das Gesamtgewicht. Beim Lauf über die Spinnmaschine war ein über die Zeit gesehen wesentlich geringerer Anfall an Gas und Neutralisationswasser im Schlauchinneren festzustellen. Dies ist auf den teilweisen Ersatz der Viskose durch die Cellulosesuspension zurückzuführen.

Die Schneidezeit konnte daher um 30 % verlängert werden, was zu einer entsprechenden Abfallreduzierung führte.

Das im aufgeblasenem Zustand getrocknete Material war erwartungsgemäß leicht trüb. Der Platzdruck war im Vergleich zum Standardmaterial um etwa 10% höher.

Der Schlauch wurde mit Wurstbrät gefüllt, gebrüht, geräuchert und abgekühlt. Unterschiede zum herkömmlichen Produkt machten sich durch kürzere Räucher- und Reifezeiten bemerkbar.

### Beispiel 3

Zur Herstellung einer faserverstärkten Nahrungsmittelhülle wurde ein auf passende Breite geschnittenes, naßfest ausgerüstetes Hanffaserpapier mit einem Gewicht von 19 g/m² von einer Rolle abgezogen, zum Schlauch geformt und beim Passieren einer Rundschlitzdüse außen mit regenerierter Cellulose beschichtet. Der Strom der regenerierten Cellulose war um 25 % reduziert. Ihm wurde die entsprechende Menge einer Suspension von Mikrofasern aus Cellulose im Gemisch mit mikrokristalliner Cellulose wie im Beispiel 2 beschrieben zudosiert. Nach Regeneration, Wäsche, Plastifizierung und Trocknung wurde der so erhaltene Schlauch aufgewickelt. Er hatte bei einen Durchmesser von 45 mm ein Flächengewicht von 76 g/m² bei einem Glyceringehalt von 20 % und einem Wassergehalt von 12 %.

Aufgrund des geringeren Anteils an regenerierter Cellulose war es möglich, die Maschinengeschwindigkeit bei gleicher Schneidezeit um 30 % zu erhöhen, ohne daß es zu störenden Gas- und Flüssigkeitsansammlungen im Schlauchinneren kam.

Das so hergestellte Material unterschied sich visuell von einem Standardmaterial durch eine etwas mattere Oberfläche. Die mechanischen Prüfwerte lagen oberhalb der unteren Toleranzgrenze von - 5 %.

Der Schlauch wurde gerafft, anschließend mit Wurstbrät gefüllt, gebrüht, geräuchert und abgekühlt. Unterschiede zum herkömmlichen Produkt machten sich durch geschmeidigeres Verhalten sowie durch kürzere Räucher- und Reifezeiten bemerkbar.

### Beispiel 4

Es wurde eine faserverstärkte, schlauchförmige Folie auf Basis von regenerierter Cellulose hergestellt, wobei der Viskosestrom jeweils um die in der nachfolgenden Tabelle 1 genannten Werte reduziert und das fehlende Gewicht an Cellulose durch einen entsprechenden Anteil an Cellulose-Mikrofasern (durchschnittliche Länge der Fasern 0,3 mm, dürchschnittliche Dicke 20 µm) ausgeglichen wurde. Die Cellulose-Mikrofasern wurden als wäßrige Suspension in die Leitung mit der Viskose eindosiert und mittels eines statischen Mischrohres homogen verteilt. Der damit hergestellte Schlauch wurde in ein Spinnbad extrudiert. Anschließend wurde er regeneriert, gewaschen, plastifiziert und getrocknet.

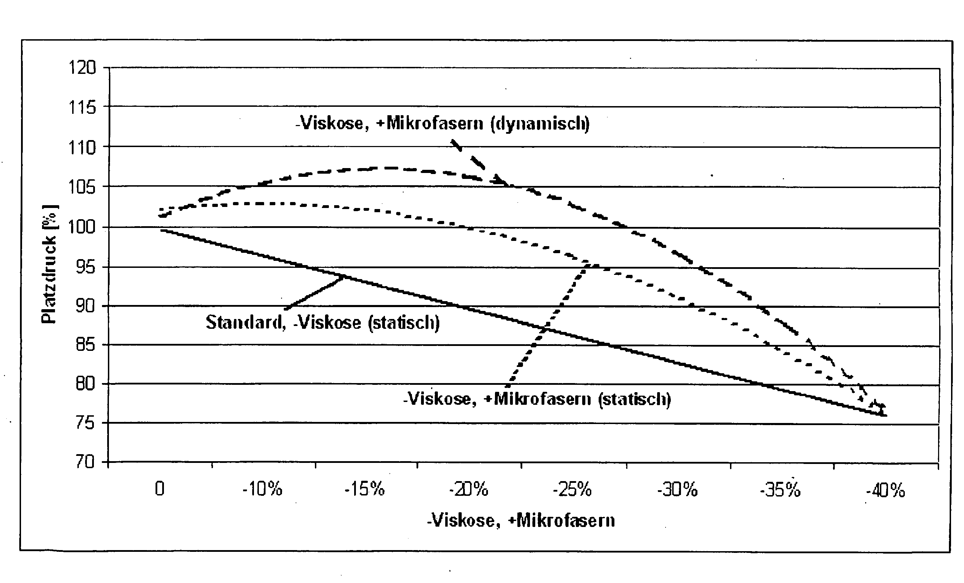

Zur Bestimmung des Platzdrucks wurde ein Standardschlauch aus regenerierter Cellulose mit einem Referenzwert von 100 % zugrunde gelegt. Tabelle 1 zeigt in Zeile A die relative Größe des Platzdrucks im Vergleich zum Referenzwert bei Reduzierung der Viskosemenge um den jeweils angegebenen Prozentsatz. In Zeile B ist die relative Größe des Platzdrucks angegeben, wenn der jeweils angegebene Prozentsatz an Viskose durch den gleichen Prozentsatz an Mikrofasern ersetzt ist. Zum besseren Verständnis sind in Fig. 1 die Werte in graphischer Form dargestellt.

**Tabelle 1:**

| | Relative Größe des Platzdrucks (in %) bei Reduktion der Viskosemenge um x % (A) bzw. bei Ersatz von x % Viskose durch x % Mikrofasern (B) | | | | | | |
|---|---|---|---|---|---|---|---|
| | 10% | 15% | 20% | 25% | 30% | 35% | 40% |
| A | 97 | 93 | 89 | 85 | 83 | 79 | 76 |
| B | 103 | 102 | 99 | 96 | 91 | 84 | 76 |

### Beispiel 5

Es wurden Schläuche hergestellt wie in Beispiel 4 beschrieben, wobei 10 % oder 20 % der regenerierten Cellulose jeweils durch 10 % oder 20 % Mikrofasern aus Cellulose ersetzt wurden.

In den hergestellten Schläuchen wurde die Dehnung in Abhängigkeit vom Druck bestimmt. Tabelle 2 zeigt die Ergebnisse.

**Tabelle 2:**

| Kaliber [mm] | Druck [kPa] | Druck [kPa] | Druck [kPa] |
|---|---|---|---|
| | 20% Fasern | 10% Fasern | Standard ohne Fasern |
| 41,0 | 3 | 7 | 2 |
| 41,5 | 5 | 10 | 4 |
| 42,0 | 8 | 13 | 7 |
| 42,5 | 12 | 17 | 12 |
| 43,0 | 17 | 22 | 16 |
| 43,5 | 23 | 29 | 23 |
| 44,0 | 32 | 37 | 34 |
| 44,5 | 46 | 46 | 50 |
| 45,0 | 60 | 60 | 60 |
| 45,5 | 78 | 78 | 78 |

In Tabelle 3 sind ferner die statischen Dehnkurven für die oben bezeichneten Schläuche angegeben.

**Tabelle 3:**

| Standard statisch | | 10 % Fasern statisch | | 20 % Fasern statisch | |
|---|---|---|---|---|---|
| Druck | Kaliber | Druck | Kaliber | Druck | Kaliber |
| 10 | 42,3 | 10 | 41,5 | 10 | 42,3 |
| 21 | 43,4 | 21 | 42,8 | 21 | 43,4 |
| 30 | 43,8 | 30 | 43,6 | 30 | 43,9 |
| 42 | 44,3 | 42 | 44,3 | 42 | 44,4 |
| 50 | 44,6 | 50 | 44,7 | 50 | 44,7 |
| 60 | 45 | 60 | 45 | 60 | 45 |
| 70 | 45,3 | 70 | 45,3 | 70 | 45,3 |

### Beispiel 6

Eine Bahn aus Hanffaserpapier mit einem Gewicht von 19 g/m² wurde zu einem Schlauch mit überlappenden Längskanten geformt, der dann durch eine Rundschlitzdüse geführt wurde. Dort wurde der Schlauch von außen und innen mit Viskose beschichtet. Auf der Innenseite wurde reine Viskose aufgebracht, in der zum Beschichten der Außenseite dienenden Masse waren dagegen 15 % der Viskose durch einen gleichen Anteil an Mikrofasern ersetzt, die in Form einer wäßrigen Suspension zugeführt wurden. Die Mikrofasern hatten eine durchschnittliche Länge von 2 mm und einen durchschnittlichen Durchmesser von 25 µm. Nach dem Regenerieren der Viskose zu Cellulose, Waschen und Plastifizieren mit Glycerin wurde der Schlauch auf der Innenseite mit einer Imprägnierung versehen, die die Haftung an dem später einzufüllenden Wurstbrät verbessert. Nach dem Aufbringen der Imprägnierung wurde der Schlauch getrocknet und aufgewickelt.

Aufgrund der verminderten Menge an Viskose und damit an zu regenerierender Viskose konnte die Maschinengeschwindigkeit bei gleichbleibender Schneidezeit um 20 % erhöht werden, ohne daß es zu störenden Gas- oder Flüssigkeitsansammlungen im Schlauchinneren kam.

Die so hergestellte Hülle unterschied sich visuell von dem Standardmaterial (ohne Mikrofasern) durch eine etwas stärkere Trübung. Da auf der Innenseite eine Viskose ohne Mikrofaserzusatz aufgebracht worden war, wurde im Vergleich zum Standardmaterial auch die gleiche Menge an Innenimprägnierung aufgenommen. Die Hülle zeigte gegenüber dem Standardmaterial eine um 50 % erhöhte Permeation.

Die fertige Hülle wurde zunächst gerafft, dann mit Dauerwurstbrät gefüllt, geräuchert und in der üblichen Weise gereift. Nach Ablauf der Reifedauer wurde das Schälverhalten der Hülle getestet. Es war praktisch ebenso gut wie das einer Standardhülle ohne Mikrofasern.

### Beispiel 7

Es wurde eine schlauchförmige Hülle auf Basis von regenerierter Cellulose hergestellt, wobei in den Viskosestrom 10 % mikrokristalline Cellulose (bezogen auf das Celluilosegewicht der fertigen Hülle) als wäßrige Suspension zugegeben wurde. Die Suspension wurde in die Viskose eindosiert und mittels eines dynamischen Mischers homogen verteilt und durch eine Ringschlitzdüse in ein Spinnbad extrudiert. Der gesponnene Schlauch wurde mit einem Ausbreiter in der Spinnkufe in Rundform gehalten und anschließend regeneriert, gewaschen, plastifiziert und getrocknet.

Das so hergestellte Material unterschied sich visuell vom Standardmaterial durch eine höhere Trübung. Die mechanischen Prüfwerte lagen innerhalb des Toleranzbereichs.

Der Schlauch wurde bedruckt, gerafft und anschließend mit Wurstbrät gefüllt, gebrüht, geräuchert und abgekühlt. Unterschiede zu herkömmlichen Produkten lagen in einer kürzeren Räucher- und Reifezeit und in einem matteren Aussehen, das dem eines Naturdarms ähnlich ist.

## Patentansprüche

1. Verpackungsfolie auf Basis von aus Viskose regenerierter Cellulose, **dadurch gekennzeichnet, daß** die regenerierte Cellulose mit Mikrofasern, mikrokristalliner Cellulose oder einer Kombination davon vermischt ist.

2. Verpackungsfolie gemäß Anspruch 1, **dadurch gekennzeichnet, daß** die Mikrofasern aus Polyester, Polyethylen, Polyamid, Polysacchariden und/oder Acryl bestehen und eine Faserfeinheit von weniger als 2 dtex, insbesondere von 0,001 bis 1,7 dtex, aufweisen.

3. Verpackuragsfolie gemäß Anspruch 1, **dadurch gekennzeichnet, daß** die Mikrofasern aus Cellulose bestehen.

4. Verpackungsfolie gemäß Anspruch 1, **dadurch gekennzeichnet, daß** die Länge der Mikrofasern 0,01 bis 20 mm, bevorzugt 0,1 bis 4 mm, insbesondere 0,2 bis 2 mm, beträgt.

5. Verpackungsfolie gemäß einem oder mehreren der Ansprüche 1 bis 4, **dadurch gekennzeichnet, daß** der Anteil der Mikrofasern und/oder der mikrokristallinen Cellulose bis zu 50 Gew.-%, bevorzugt 10 bis 30 Gew.-%, besonders bevorzugt 15 bis 25 Gew.-%, jeweils bezogen auf das Gewicht der regenerierten Cellulose, beträgt.

6. Verpackungsfolie gemäß einem oder mehreren der Ansprüche 1 bis 5, **dadurch gekennzeichnet, daß** sie eine Verstärkung aus einem Faservlies umfaßt.

7. Verpackungsfolie gemäß Anspruch 6, **dadurch gekennzeichnet, daß** das Faservlies auf der Außenseite, auf der Innenseite oder auf beiden Seiten eine Schicht aus regenerierter Cellulose aufweist.

8. Verpackungsfolie gemäß Anspruch 6, **dadurch gekennzeichnet, daß** sich nur in der auf der Außenseite oder der auf der Innenseite befindlichen Schicht aus regenerierter Cellulose Mikrofasern und/oder mikrokristalline Cellulose befinden.

9. Verpackungsfolie gemäß einem oder mehreren der Ansprüche 1 bis 8, **dadurch gekennzeichnet, daß** sie schlauchförmig ist.

10. Verpackungsfolie gemäß Anspruch 9, **dadurch gekennzeichnet, daß** sie als zylindrisch gerader, zylindrisch gebogener oder spiralförmiger Schlauch vorliegt, dessen Durchmesser regelmäßig oder unregelmäßig variieren kann.

11. Verpackungsfolie gemäß Anspruch 9, **dadurch gekennzeichnet, daß** sie in komprimierter Form als Raffraupe vorliegt.

12. Verfahren zur Herstellung einer Verpackungsfolie gemäß einem oder mehreren der Ansprüche 1 bis 11, **dadurch gekennzeichnet, daß** es die folgenden Schritte umfaßt:
a) Bereitstellen von Mikrofasern und/oder mikrokristalliner Cellulose in Form einer wäßrigen oder wäßrig-alkalischen Suspension,
b) Bereitstellen von Viskose,
c) Vermischen derwäßrigen oder wäßrig-alkalischen Suspension mit der Viskose,
d) Extrudieren der Mischung oder Beschichten eines Faservlieses mit der Mischung auf einer oder beiden Seiten,
e) Regenerieren der Viskose zu Cellulose durch Behandeln mit Säure, und
f) Waschen, gegebenenfalls Plastifizieren, gegebenenfalls Imprägnieren, und
g) Trocknen.

13. Verfahren gemäß Anspruch 12, **dadurch gekennzeichnet, daß** die Viskose sowie Mikrofasern und/oder mikrokristalline Cellulose umfassende Mischung ohne Verwendung eines Faservlieses zu einer nahtlosen schlauchförmigen Folie extrudiert wird, die beim nachfolgenden Trocknen in eine spiralförmige Form oder in eine Form mit regelmäßig oder unregelmäßig variierendem Durchmesser gebracht wird.

14. Verfahren gemäß Anspruch 12, **dadurch gekennzeichnet, daß** der Anteil der Mikrofasern und/oder der mikrokristallinen Cellulose in der wäßrigen oder wäßrig-alkalischen Suspension 2 bis 25 Gew.-%, bevorzugt von 5 bis 10 Gew.-%, beträgt, jeweils bezogen auf das Gesamtgewicht der Suspension.

15. Verwendung der Verpackungsfolie gemäß einem oder mehreren der Ansprüche 1 bis 10 als künstliche Wursthülle.

## Claims

1. A packaging film based on cellulose regenerated from viscose, wherein the regenerated cellulose is mixed with microfibers, microcrystalline cellulose or a combination thereof.

2. The packaging film as claimed in claim 1, wherein the microfibers comprise polyester, polyethylene, polyamide, polysaccharides and/or acrylic and have a fiber fineness of less than 2 dtex, in particular from 0.001 to 1.7 dtex.

3. The packaging film as claimed in claim 1, wherein the microfibers comprise cellulose.

4. The packaging film as claimed in claim 1, wherein the length of the microfibers is 0.01 to 20 mm, preferably 0.1 to 4 mm, in particular 0.2 to 2 mm.

5. The packaging film as claimed in one or more of claims 1 to 4, wherein the fraction of the microfibers and/or the microcrystalline cellulose is up to 50 % by weight, preferably 10 to 30 % by weight, particularly preferably 15 to 25 % by weight, in each case based on the weight of the regenerated cellulose.

6. The packaging film as claimed in one or more of claims 1 to 5, which comprises a reinforcement of a nonwoven fabric.

7. The packaging film as claimed in claim 6, wherein the nonwoven fabric has a layer of regenerated cellulose on the outside, on the inside, or on both sides.

8. The packaging film as claimed in claim 6, wherein microfibers and/or microcrystalline cellulose are situated only in the layer of regenerated cellulose situated on the outside or in the layer of regenerated cellulose situated on the inside.

9. The packaging film as claimed in one or more of claims 1 to 8, wherein it is tubular.

10. The packaging film as claimed in claim 9, wherein it is a cylindrically straight, cylindrically curved or spiral tube, the diameter of which can vary regularly or irregularly.

11. The packaging film as claimed in claim 9, wherein it is a shirred stick in compacted form.

12. A process for producing a packaging film as claimed in one or more of claims 1 to 11, which comprises the following steps:
a) providing microfibers and/or microcrystalline cellulose in the form of an aqueous or aqueous-alkaline suspension,
b) providing viscose,
c) mixing the aqueous or aqueous-alkaline suspension with the viscose,
d) extruding the mixture or coating a nonwoven fabric with the mixture on one or both sides,
e) regenerating the viscose to cellulose by treating it with acid, and
f) washing, optionally plasticizing, optionally impregnating, and
g) drying.

13. The process as claimed in claim 12, wherein the mixture comprising viscose and also microfibers and/or microcrystalline cellulose is extruded without using a nonwoven fabric to form a seamless tubular film which, on subsequent drying is brought into a spiral shape or into a shape having regularly or irregularly varying diameter.

14. The process as claimed in claim 12, wherein the fraction of the microfibers and/or of the microcrystalline cellulose in the aqueous or aqueous-alkaline suspension is 2 to 25 % by weight, preferably from 5 to 10 % by weight, in each case based on the total weight of the suspension.

15. The use of the packaging film as claimed in one or more of claims 1 to 10 as artificial sausage casing.

## Revendications

1. Feuille d'emballage à base de cellulose régénérée à partir de viscose, **caractérisée en ce que** la cellulose régénérée est mélangée à des microfibres, à de la cellulose microcristalline ou à une combinaison de celles-ci.

2. Feuille d'emballage selon la revendication 1, **caractérisée en ce que** les microfibres sont constituées de polyester, de polyéthylène, de polyamide, de polysaccharides et/ou d'acryle et présentent une finesse de fibre inférieure à 2 dtex, en particulier, de 0,001 à 1,7 dtex.

3. Feuille d'emballage selon la revendication 1, **caractérisée en ce que** les microfibres sont constituées de cellulose.

4. Feuille d'emballage selon la revendication 1, **caractérisée en ce que** la longueur des microfibres est de 0,01 à 20 mm, de préférence, de 0,1 à 4 mm, en particulier, de 0,2 à 2 mm.

5. Feuille d'emballage selon l'une quelconque ou plusieurs des revendications 1 à 4, **caractérisée en ce que** la proportion de microfibres et/ou de cellulose microcristalline constitue, respectivement, jusqu'à 50 % en poids, de préférence de 10 à 30 % en poids, mieux encore, de 15 à 25 % en poids par rapport au poids de la cellulose régénérée.

6. Feuille d'emballage selon l'une quelconque ou plusieurs des revendications 1 à 5, **caractérisée en ce qu'**elle comprend un renforcement en non-tissé de fibres.

7. Feuille d'emballage selon la revendication 6, **caractérisée en ce que** le non-tissé de fibres présente une couche de cellulose régénérée sur la face externe, sur la face interne ou sur les deux faces.

8. Feuille d'emballage selon la revendication 6, **caractérisée en ce que** l'on trouve des microfibres et/ou de la cellulose microcristalline uniquement dans la couche à base de cellulose régénérée située sur la face externe ou uniquement dans celle située sur la face interne.

9. Feuille d'emballage selon l'une quelconque ou plusieurs des revendications 1 à 8, **caractérisée en ce qu'**elle présente une forme tubulaire.

10. Feuille d'emballage selon la revendication 9, **caractérisée en ce qu'**elle se présente sous la forme d'un tube cylindrique droit, d'un tube cylindrique recourbé ou spiralé, dont le diamètre peut varier d'une manière régulière ou irrégulière.

11. Feuille d'emballage selon la revendication 9, **caractérisée en ce qu'**elle se présente, à l'état comprimé, sous la forme d'une chenille contractée.

12. Procédé de fabrication d'une feuille d'emballage selon l'une quelconque ou plusieurs des revendications 1 à 11, **caractérisé en ce qu'**il comprend les étapes suivantes consistant à :
a) préparer des microfibres et/ou de la cellulose microcristalline sous la forme d'une suspension aqueuse ou aqueuse alcaline,
b) préparer de la viscose,
c) mélanger la suspension aqueuse ou aqueuse alcaline à la viscose,
d) extruder le mélange ou revêtir un non-tissé de fibres avec le mélange sur une face ou les deux,
e) régénérer la viscose en cellulose par traitement avec un acide, et
f) procéder à un lavage, éventuellement à une plastification, éventuellement à une imprégnation, et
g) sécher.

13. Procédé selon la revendication 12, **caractérisé en ce que** l'on extrude la viscose, ainsi que le mélange comprenant des microfibres et/ou de la cellulose microcristalline, sans utiliser un non-tissé de fibres, sous la forme d'une feuille tubulaire exempte de jointure qui sera convertie, lors du séchage ultérieur, sous une forme spiralée ou sous une forme présentant un diamètre variant de manière régulière ou irrégulière.

14. Procédé selon la revendication 12, **caractérisé en ce que** la proportion de microfibres et/ou de cellulose microcristalline dans la suspension aqueuse ou aqueuse alcaline représente respectivement 2 à 25 % en poids, de préférence, 5 à 10 % en poids par rapport au poids total de la suspension.

15. Utilisation de la feuille d'emballage selon l'une quelconque ou plusieurs des revendications 1 à 10, comme enveloppe de saucisse synthétique.
